Europäisches Patentamt

European Patent Office

Office européen des brevets

(19)

(11) Veröffentlichungsnummer : **0 052 383
B1**

(12) **EUROPÄISCHE PATENTSCHRIFT**

(45) Veröffentlichungstag der Patentschrift :
15.05.85

(51) Int. Cl.⁴ : **H 02 K   3/24,** H 02 K   1/32

(21) Anmeldenummer : **81201009.8**

(22) Anmeldetag : **10.09.81**

(54) **Kühlmediumsverteilkörper.**

(30) Priorität : **17.11.80 CH 8494/80**

(43) Veröffentlichungstag der Anmeldung :
**26.05.82 Patentblatt 82/21**

(45) Bekanntmachung des Hinweises auf die Patenterteilung : **15.05.85 Patentblatt 85/20**

(84) Benannte Vertragsstaaten :
**AT CH DE GB LI SE**

(56) Entgegenhaltungen :
**DE-B- 1 191 475
DE-B- 1 225 288
FR-A- 2 433 255
US-A- 3 514 647
US-A- 3 846 651**

(73) Patentinhaber : **BBC Aktiengesellschaft Brown,
Boveri & Cie.
Haselstrasse
CH-5401 Baden (CH)**

(72) Erfinder : **Baer, Jürgen
Rasehübel 273
CH-5506 Mägenwil (CH)**
Erfinder : **Toplak, Ernst, Dr.
Hintermatthof 8
CH-5452 Oberrohrdorf (CH)**

0 052 383

**Beschreibung**

Die Erfindung bezieht sich auf eine axialbelüftete elektrische Maschine mit einem Rotor mit ausgeprägten Polen, wobei in den Pollücken in axialer Richtung sich erstreckende Kühlmediumverteilkörper angeordnet sind. Eine derartige Maschine ist aus der DE-B-1 191 475 bekannt.

Zweck der Kühlung von elektrischen Maschinen ist es, die Wärmeverluste so abzuführen, dass beim Nennbetrieb die Erwärmung in den einzelnen Teilen der elektrischen Maschine die gegebenen Grenztemperaturen nicht überschreitet.

Schenkelpolmaschinen, die ihr Kühlmedium symmetrisch von beiden Seiten zugeführt erhalten, weisen bekanntlich in der Mitte höhere Temperaturen an den Polwicklungen auf als in der Nähe der Stirnseiten, kurz nach Eintritt des Kühlmediums in die Pollücken. Dies wird dadurch verursacht, dass das Kühlmedium über den Luftspalt zwischen Rotor und Stator über die axiale Länge der Maschine gesehen, in den letztgenannten übertritt. Dadurch nimmt die Geschwindigkeit in den Pollücken bis zur Mitte der Maschine ständig ab, so dass mit den kleinen Kühlmediumgeschwindigkeiten keine ausreichende zur Verlustabführung genügende Wärmeübergangszahl mehr erreicht wird.

Die DE-B-1 191 475 betrifft eine Anordnung zur Führung des Kühlmediums in den Pollücken von Schenkelpolläufern elektrischer Maschinen in radialer Richtung längs der zu kühlenden Flanken der Polspulen. Die Führung des Kühlmediums erfolgt jedoch nur in dem relativ schmalen, axial sich erstreckenden Bereich der Wicklungsstützen. In dem weitaus grösseren axial sich erstreckenden Bereich der Pollücke strömt das Kühlgas axial von den Stirnflächen des Rotors in die Pollücken ein und wird nicht gezielt an den Flächen geleitet, von denen die Verlustwärme der elektrischen Maschine abgeführt werden soll.

In der DE-B-1 225 288 ist eine Anordnung zur Führung des Kühlmediums an Schenkelpolläufern beschrieben, bei der die Kühlgaszufuhr von einem Pollückengrundkanal aus erfolgt, wobei das radial nach aussen aufgewölbte V-förmig ausgebildete Kühlmittelführungssegment in dem der Maschinenachse zugewandten Teil der Polspulen mit Oeffnungen versehen ist. Die Kühlung der Polwicklungen ist in den radial äusseren Bereichen, infolge des dort verbreiterten Querschnittes der Lüftungskanäle, nicht besonders wirksam.

Bei den aus der DE-B-1 085 606 bekannten in den Pollücken zum Einbau gelangten Verdrängungskörpern wird zwar das Kühlmedium gezielt an die zu kühlenden Flächen, insbesondere Polspulen geführt und dabei die Geschwindigkeit des radial in die Pollücken einströmenden Kühlmediums und damit die Wärmeübergangszahl des Kühlmediums angehoben, aber diese Massnahme wird erkauft durch einen höheren statischen Druckabfall im Maschinenkühlkreis und als Folge daraus resultiert eine erhöhte Leistung für die Kühlstromumwälzung und damit gleichzeitig eine Erhöhung der Ventilatorantriebsleistung. In ungünstigen Fällen könnte es sogar dazu führen, dass zu anderen Druckerzeugern übergegangen werden muss.

Hier will die Erfindung Abhilfe schaffen.

Die Erfindung, wie sie in den Ansprüchen gekennzeichnet ist, löst die Aufgabe, eine axialbelüftete elektrische Maschine mit einem Rotor mit ausgeprägten Polen zu schaffen, bei der eine wirksamere Kühlung der Polwicklungen mit einfachen konstruktiven und fertigungstechnischen Massnahmen erreicht wird.

Die Anordnung und Verteilung der Kühlmediumverteilkörper in den Pollücken weisen folgende Vorteile auf :

— Durch Verkleinerung des Querschnittes an den Polspulenlängsseiten wird die radiale Geschwindigkeit des Kühlmediums derart erhöht, dass eine ausreichende Wärmeübergangszahl zur Wärmeabfuhr erreicht wird ;

— Die Einrichtung übernimmt durch ihre Form auch die Funktion des bekannten Pollückengrundkanales, d. h. sie sorgt dafür, dass ein grösserer Anteil des Kühlmediums unvorgewärmt in die Mitte der Maschine strömen kann ;

— der bisher bekannte Pollückengrundkanal wird nicht mehr in dem Ausmass wie bisher ausgeführt werden müssen ;

— es kann die gleiche sekundliche Kühlstrommenge ohne erhöhten statischen Druckabfall der Maschine zugeführt werden, da die Querschnittsverengung am Pollückeneintritt sehr gering ist, da nur die Wandstärke des Kühlmediumverteilkörpers den wirklichen Querschnitt vermindert ;

— es kann sogar zu einem erhöhten Kühlstrom führen, da die Druckerzeugung des Schenkelpolrades verbessert wird.

Nach Anspruch 2 wird der wirksame Querschnitt der Kühlmediumströmungsöffnungen in axialer Strömungsrichtung im Kühlmediumverteilkörper variiert, eine Massnahme, die gleichfalls eine gleichmässige Kühlwirkung in Maschinenlängsrichtung bewirkt.

In den Ansprüchen 3, 4, 5, 6 und 7 wird die konstruktive Ausbildung des Kühlmediumverteilkörpers beschrieben.

Bei beidseitig ventilierten Maschinen sind nach Anspruch 3 pro Pollücke wenigstens zwei Kühlmediumverteilkörper angeordnet, die sich annähernd symmetrisch von den Stirnseiten bis zur Rotormitte erstrecken und dort offen oder teilweise oder ganz geschlossen sind und die nach Anspruch 4 Leiteinrichtungen aufweisen.

2

Alternativ zu Anspruch 3 und 4 betrifft Anspruch 5 eine einstückige Ausführungsform eines Kühlmediumverteilkörpers, der nach Anspruch 6 im rotormittigen Abschnitt teilweise oder ganz durch eine Trennwand separiert ist, die nach Anspruch 7 als Leiteinrichtung ausgebildet ist.

Die Erfindung wird nachstehend anhand eines in der Zeichnung dargestellten Ausführungsbeispieles näher erläutert.

In der Zeichnung zeigt :

Figur 1   eine perspektivische, teilweise Schnittdarstellung des erfindungsgemässen Rotors,

Figur 2   einen Längsschnitt durch einen Kühlmediumverteilkörper,

Figur 3   einen teilweisen Querschnitt durch einen erfindungsgemässen Rotor gemäss Fig. 1 und 2

Figur 4   einen teilweisen Querschnitt durch einen erfindungsgemässen Rotor gemäss Fig. 1 und 2 jedoch in anderer Schnittlage als Fig. 3 und einer anderen Ausgestaltung der Pole.

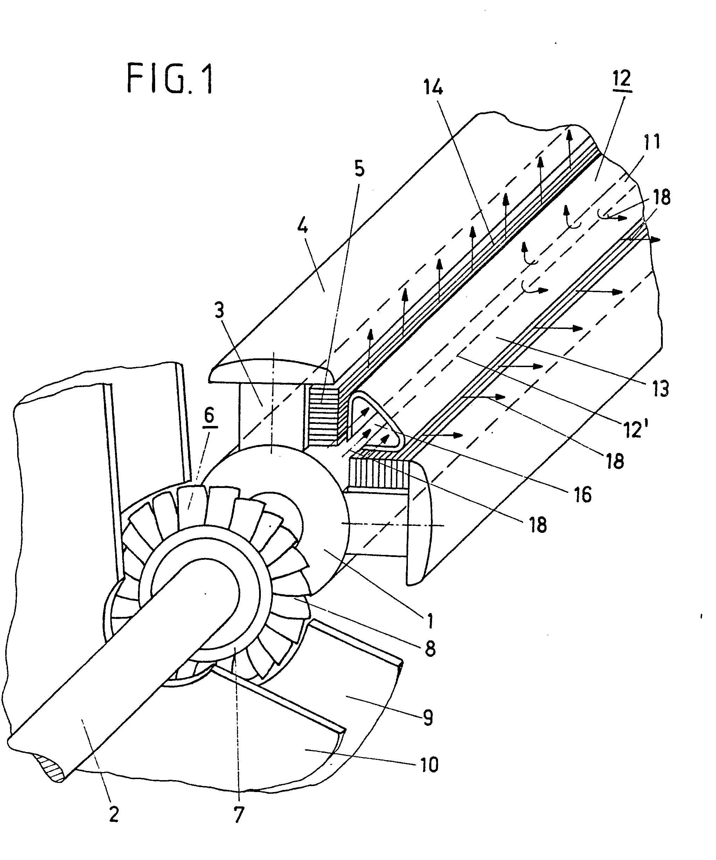

Fig. 1 zeigt einen teilweisen Schnitt eines erfindungsgemässen Rotors.

Ein Zentralkörper 1 ist auf einer Welle 2 aufgesetzt und mit Polkernen 3 versehen, die Polschuhe 4 und Polspulen 5 tragen. Auf der Rotorwelle 2 ist ein Axialventilator 6 angebracht, der aus einem Schaufelträger 7 und mehreren Ventilatorflügeln 8 besteht. Der Axialventilator 6 befindet sich in einer Oeffnung einer äusseren Ventilatorverschalung. Die Welle 2 ist in einem nicht näher dargestellten Lager, das sich innerhalb des Lagerschildes 10 befindet, drehbar angeordnet.

Aus Gründen der Uebersichtlichkeit ist in Fig. 1 nur eine Hälfte des Rotors dargestellt, wobei auch das andere Ende des Rotors mit einem Axialventilator versehen ist.

In diesem Beispiel sind nur zwei Polkerne 3 mit den dazugehörigen Polspulen 5 gezeichnet. In dem Zwischenraum zwischen den Flächen der Polkerne 3 bzw. der Polspulen 5 ist die Pollücke 11 dargestellt, in der sich ein Kühlmediumverteilkörper 12 befindet. Seine Seitenflächen 13 verlaufen parallel zu den zu kühlenden Seitenflächen der Polkerne 3 bzw. der Polspulen 5.

Auf diese Weise werden Spalten 14 zwischen den Seitenflächen 13 des Kühlmediumverteilkörpers 12 und den Seitenflächen der Polkerne 3 bzw. der Polspulen 5 ausgebildet.

Der Kühlmediumverteilkörper 12 ist in Richtung zum Axialventilator 6 und zum Zentralkörper 1 hin geöffnet.

Demgegenüber ist er am anderen Ende, im rotormittigen Abschnitt mit einer Abschlussplatte 15 verschlossen, die in Fig. 1 nicht, jedoch auf den nachfolgenden Zeichnungen dargestellt ist.

Aus Gründen der Uebersichtlichkeit sind in Fig. 1 keine Befestigungselemente des Kühlmediumverteilkörpers 12 gezeigt, diese werden jedoch in den folgenden Zeichnungen näher dargestellt. Mit Bezugsziffer 16 werden die Oeffnungen bezeichnet, die im Teil des Kühlmediumverteilkörpers 12′ der dem Zentralkörper 1 des Rotors zugewandt ist, angebracht sind.

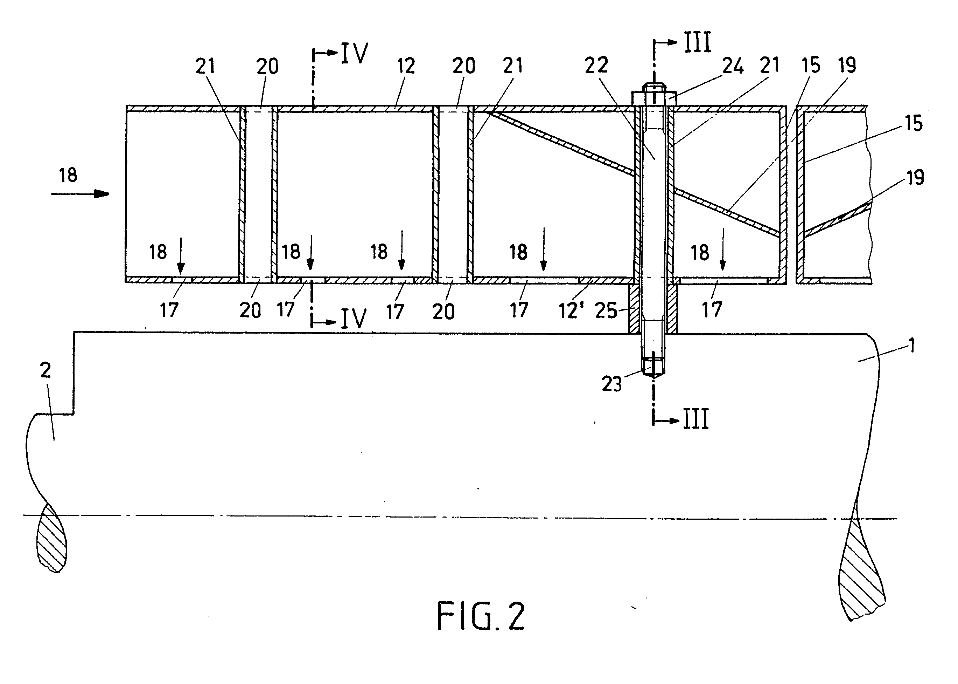

Fig. 2 zeigt eine Längsschnittdarstellung einer beispielsweisen Ausführungsform des Kühlmediumverteilkörpers 12, wobei jedoch anstelle der in Fig. 1 gezeigten, ununterbrochenen Oeffnung 16 in Form eines Längsspaltes, in dem den Zentralkörper zugewandten Teils 12′ des Kühlmediumverteilkörpers 12, in Fig. 2 mehrere, durch den Befestigungsmechanismus des Kühlmediumverteilkörpers 12 sich ergebende Unterbrechungen der Oeffnungen 17 ausgebildet sind. Mit Pfeil 18 ist die Strömungsrichtung des Kühlmediums angegeben.

Wie aus Fig. 2 ersichtlich ist, wird der wirksame Querschnitt der Oeffnungen 17 in der Richtung der Strömung des Kühlmediums, bis zur Maschinenmitte variiert.

Als weitere Massnahme zur Druck- bzw. Geschwindigkeitsstabilisierung des Kühlmediums im rotormittigen Teil sind schräg verlaufende Leiteinrichtungen 19 angeordnet, die gleichzeitig der mechanischen Versteifung des Kühlmediumverteilkörpers 12 dienen.

Für die Befestigung der Kühlmediumverteilkörper 12 sind im Kühlmediumverteilkörper 12 mehrere Bohrungen 20 angebracht, in die Hülsen 21 eingesetzt und verfestigt sind. Diese Hülsen 21 dienen für den Durchgang von Haltebolzen 22, die in Bohrungen 23 des Zentralkörpers des Rotors 1 eingeschraubt sind.

Im dargestellten Beispiel ist nur ein Haltebolzen 22 gezeichnet. Für die Befestigung der Kühlmediumverteilkörper 12 an den Haltebolzen 22 dient je eine Mutter 24.

Zwischen dem Kühlmediumkörper 12 und dem Zentralkörper des Rotors 1 befinden sich Distanzhülsen 25, so dass der Raum zwischen dem den Zentralkörper 1 zugewandten Teil 12′ des Kühlmediumverteilkörpers 12 und dem Zentralkörper 1 wählbar distanziert werden kann. Die Distanzhülsen 25 bestehen aus einem metallischen Werkstoff, z. B. austenitischer Stahl.

In Fig. 2 ist lediglich ein Kühlmediumverteilkörper 12 gezeichnet, der sich von der einen Stirnseite des Rotors bis zur Rotormitte erstreckt, symmetrisch dazu ist in der rechten Rotorhälfte ein zweiter Kühlmediumverteilkörper 12 angeordnet, der in Fig. 2 nur andeutungsweise dargestellt ist.

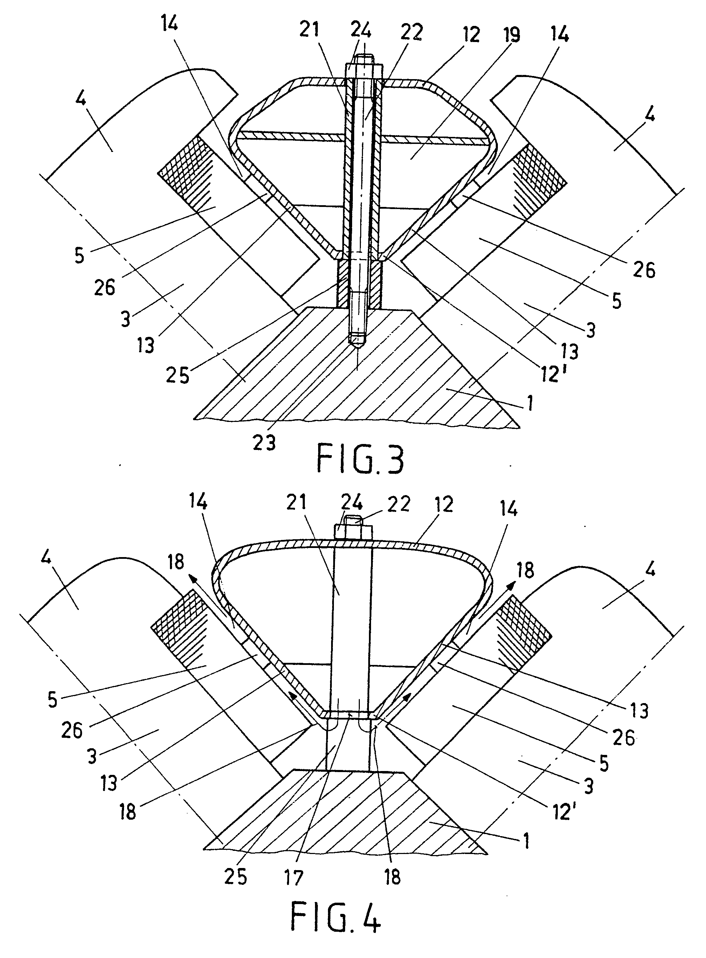

Fig. 3 zeigt den Schnitt III aus Fig. 2. Für die Fig. 3 gelten für dieselben Teile die gleichen Bezugsziffern wie in Fig. 1 und 2.

Die räumliche Anordnung des Kühlmediumverteilkörpers 12 in der Pollücke 11 ist sichtbar. Der Kühlmediumverteilkörper 12 ist im Unteren Teil 12′ durch Distanzhülsen 25 vom Zentralkörper des Rotors 1 beabstandet und die Seitenflächen 13 werden durch Wicklungsabstützungen 26 von den Seitenflächen der Polspulen 5 distanziert. Die Wicklungsabstützungen 26 bestehen vorzugsweise aus Kunststoff. Aus Fig. 3 ist ersichtlich, wie die Ausbildungsform des Kühlmediumverteilkörpers 12 derjenigen der Polkerne 3, der Polschuhe 4 und Polspule 5 angepasst werden kann.

Die Kühlmediumverteilkörper 12 bestehen in diesem Beispiel aus austenitischem Stahl, aus

3

Aluminiumlegierung oder aus glasfaserverstärktem Kunststoff. Die Leiteinrichtung 19 besteht aus dem gleichen Material.

Eine ähnliche erfindungsgemässe, beispielsweise Ausführungsform ist in Fig. 4 dargestellt, die dem Schnitt IV der Fig. 2 entspricht.

Um die Anpassungsmöglichkeit des Kühlmediumverteilkörpers 12 an unterschiedliche konstruktive Ausführungsformen der Polkerne 3, Polschuhe 4 und Polspulen 5 zu zeigen, wurde in Fig. 4 ein Teilquerschnitt durch einen Rotor dargestellt, dessen Polschuhe 4 wesentlich kürzer sind als in Fig. 3, und die Polspulen 5 über den Polschuh 4 hinausragen.

In diesem Fall hat der Kühlmediumverteilkörper 12 eine andere Ausführungsform wie in Fig. 3 dargestellt, um für diese Maschinenart eine optimale Kühlmittelführung sicherzustellen. In Fig. 4 sieht man den Schnitt durch eine Oeffnung 17, aus der das Kühlmedium aus dem Kühlmediumverteilkörper 12 austritt und die Strömungsrichtung des Kühlmediums entlang der Seitenflächen der Polspulen 5, die in Richtung der Pfeile mit der Bezugsziffer 18 dargestellt ist.

Die Wirkungsweise des dargestellten Beispieles des Kühlmediumverteilkörpers 12 ist wie folgt : Der durch die rechts und links ausserhalb des Rotorkörpers befindlichen Axialventilatoren 6 erzeugte Kühlmediumstrom wird von den Stirnseiten des Rotors, in axialer Richtung, entsprechend der dargestellten Pfeile 18 in Fig. 1, in die Kühlmediumverteilkörper 12 gefördert. Das Kühlmedium durchströmt beidseitig die Kühlmediumverteilkörper 12 in Längsrichtung parallel zur Maschinenachse und wird zum Zentralkörper des Rotors 1 hin abgelenkt, tritt durch die Oeffnungen 16, die sich in dem, dem Zentralkörper zugewandte Teil 12′ des Kühlmediumverteilkörpers 12 befinden und wird in die Spalten 14 hineingeführt, die die Seitenflächen 13 des Kühlmediumverteilkörpers 12 und die Seitenflächen der Polkerne 3 bzw. der Polspulen 5 beabstanden. Dabei wird die axiale Strömungsrichtung des Kühlmediums innerhalb der Kühlmediumverteilkörper 12 in eine radiale Strömung entsprechend der dargestellten Pfeile 18 umgelenkt. Dieser radiale Kühlmediumstrom wird kontinuierlich an den Seitenflächen der Polspulen 5 bzw. der Polkerne 3 in allen Zonen des Rotors entlanggeführt und ermöglicht bei entsprechender Anpassung der Kühlmittelmenge- und Geschwindigkeit je nach Maschinentyp eine optimale Abführung der Verlustwärme von den Polspulen 5 bzw. von den Polkernen 3 in allen Teilen des Rotors.

Bezeichnungsliste

1 Zentralkörper des Rotors
2 Welle des Rotors
3 Polkerne
4 Polschuhe
5 Polspulen
6 Axialventilator
7 Schaufelträger
8 Ventilatorflügel
9 Aeussere Ventilatorverschalung
10 Lagerschild
11 Pollücke
12 Kühlmediumverteilkörper
12′ Teil des Kühlmediumverteilkörpers, der dem Zentralkörper des Rotors zugewandt ist
13 Seitenflächen des Kühlmediumverteilkörpers
14 Spalten
15 Abschlussplatte
16 Oeffnungen (Längsspalt)
17 Oeffnungen (unterbrochene)
18 Pfeil für Strömungsrichtung des Kühlmediums
19 Leiteinrichtung
20 Bohrungen im Kühlmediumverteilkörper
21 Hülsen
22 Haltebolzen
23 Bohrungen im Zentralkörper
24 Mutter
25 Distanzhülsen
26 Wicklungsabstützung

**Patentansprüche**

1. Beidseitig axialbelüftete elektrische Maschine mit einem Rotor mit ausgeprägten Polen, wobei die Polkerne (3) Polspulen (5) tragen und in jeder Pollücke wenigstens ein sich in axialer Richtung erstreckender Kühlmediumverteilkörper (12) angeordnet ist, dessen Seitenflächen (13) von den Polspulen (5) unter Ausbildung von Spalten (14) beabstandet sind, dadurch gekennzeichnet, dass der Kühlmediumverteilkörper (12) rohrförmig ausgebildet und stirnseitig offen ist, dass in dem Zentralkörper (1) des Rotors zugewandten Teil (12') des Kühlmediumverteilkörpers (12) mindestens eine Oeffnung (16, 17) vorgesehen ist, dass die Seitenflächen (13) des rohrförmigen Kühlmediumverteilkörpers (12) über die gesamten Seitenflächen der zu kühlenden Polspulen (5) parallel verlaufen, dass das gasförmige Kühlmedium axial in den Kühlmediumverteilkörper (12) einströmt, dass im Inneren des Kühlmediumverteilkörpers (12) nach Umlenkung in Richtung zum Zentralkörper (1) des Rotors durch die Oeffnung (17, 18) in den Raum zwischen dem Kühlmediumverteilkörper (12) und dem Zentralkörper (1) des Rotors geleitet, dass nach nochmaliger Umlenkung in die genannten Spalten (14) zu den Polspulen (5) geführt, und dass der rohrförmige Kühlmediumverteilkörper (12) mittels Haltebolzen (22) mit dem Zentralkörper (1) des Rotors verbunden und von dem letztgenannten distanziert ist.

2. Axialbelüftete elektrische Maschine nach Anspruch 1, dadurch gekennzeichnet, dass der wirksame Querschnitt der Kühlmediumströmungsöffnungen (17) in axialer Strömungsrichtung des Kühlmediums im Kühlmediumverteilkörper (12) zum Zweck einer gleichmässigen Kühlwirkung variiert wird.

3. Axialbelüftete elektrische Maschine nach Anspruch 1 oder 2, dadurch gekennzeichnet, dass bei beidseitiger Ventilation pro Pollücke (12) wenigstens zwei Kühlmediumverteilkörper (13) angeordnet sind, die sich annähernd symmetrisch von den Stirnenden bis zur Rotormitte erstrecken und dort offen, teilweise oder ganz geschlossen sind.

4. Axialbelüftete elektrische Maschine nach einem der Ansprüche 1 bis 3, dadurch gekennzeichnet, dass in den Kühlmediumverteilkörpern Leiteinrichtungen (19) angebracht sind.

5. Axialbelüftete elektrische Maschine nach einem der Ansprüche 1 bis 3, dadurch gekennzeichnet, dass bei beidseitiger Ventilation die Kühlmediumverteilkörper (12) einstückig ausgeführt sind.

6. Axialbelüftete elektrische Maschine nach Anspruch 5, dadurch gekennzeichnet, dass bei beidseitiger Ventilation die Kühlmediumverteilkörper (12) einstückig ausgeführt sind, und im rotormittigen Abschnitt teilweise oder ganz durch eine Trennwand separiert sind.

7. Axialbelüftete elektrische Maschine nach Anspruch 5, dadurch gekennzeichnet, dass die Trennwand als Leiteinrichtung (19) ausgebildet ist.

## Claims

1. Electric machine, axially ventilated on both sides and having a salient-pole rotor, in which the pole shanks (3) carry pole coils (5) and in each interpolar gap at least one coolant-distributing body (12) is arranged, which extends in the axial direction, the side faces (13) of which are at a distance from the pole coils (5), forming gaps (14), characterised in that the coolant-distributing body (12) is constructed to be tubular and is open at its front end, that in the part (12'), facing the central body (1) of the rotor, of the coolant-distributing body (12) at least one opening (16, 17) is provided, that the side faces (13) of the tubular coolant-distributing body (12) are parallel to the entire side faces of the pole coils (5) to be cooled, that the gaseous coolant flows axially into the coolant-distributing body (12), that in the interior of the coolant-distributing body (12) it is guided, after deflection in the direction of the central body (1) of the rotor, through the opening (17, 18) into the space between the coolant-distributing body (12) and the central body (1) of the rotor, that, after being deflected again, it is guided into the said gaps (14) to the pole coils (5) and that the tubular coolant-distributing body (12) is joined to the central body (1) of the rotor and kept at a distance from the latter by means of retaining bolts (22).

2. Axially-ventilated electric machine according to Claim 1, characterised in that the effective cross-section of the coolant-flow openings (17) in the axial direction of the coolant-flow in the coolant-distributing body (12) is varied for the purpose of uniform cooling action.

3. Axially-ventilated electric machine according to Claim 1 or 2, characterised in that in the case of ventilation on both sides, at least two coolant-distributing bodies (13) are arranged per interpolar gap (12) which bodies extend approximately symmetrically from the front ends to the rotor centre and are there open, partially or wholly closed.

4. Axially-ventilated electric machine according to one of Claims 1 to 3, characterised in that guiding devices (19) are mounted in the coolant-distributing bodies.

5. Axially-ventilated electric machine according to one of Claims 1 to 3, characterised in that, in the case of ventilation on both sides, the coolant-distributing bodies (12) are constructed to be of one piece.

6. Axially-ventilated electric machine according to Claim 5, characterised in that, in the case of ventilation on both sides, the coolant-distributing bodies (12) are constructed of one piece and are partially or wholly separated by a partition in the rotor centre section.

7. Axially-ventilated electric machine according to Claim 5, characterised in that the partition is constructed as a guiding device (19).

## Revendications

1. Machine électrique ventilée axialement des deux côtés comportant un rotor à pôles saillants, étant entendu que les noyaux magnétiques (3) portent des enroulements polaires (5) et que, dans chaque intervalle polaire, est monté au moins un corps distributeur d'agent de refroidissement (12) qui s'étend dans le sens axial, les faces latérales (13) de ce corps étant espacées des enroulements polaires (5) de manière à ménager des interstices (14), caractérisée en ce que le corps distributeur d'agent de refroidissement (12) est tubulaire et ses faces d'about sont ouvertes, au moins une ouverture (16, 17) est prévue dans la partie (12') du corps distributeur d'agent de refroidissement (12) tournée vers le corps central (1) du rotor, les faces latérales (13) du corps distributeur d'agent de refroidissement tubulaire (12) s'étendent parallèlement aux enroulements polaires (5) à refroidir sur la totalité de leurs faces latérales, l'agent de refroidissement gazeux pénètre axialement dans le corps distributeur d'agent de refroidissement (12), puis à l'intérieur du corps distributeur d'agent de refroidissement (12), après avoir été dévié en direction du corps central (1) du rotor, il passe par l'ouverture (17, 18) dans l'espace prévu entre le corps distributeur d'agent de refroidissement (12) et le corps central (1) du rotor et, après avoir été dévié une nouvelle fois, il s'écoule dans les interstices (14) vers les enroulements polaires (5) et le corps distributeur d'agent de refroidissement tubulaire (12) est relié au corps central (1) du rotor au moyen de boulons d'assemblage (22) et est maintenu espacé de ce corps central (1).

2. Machine électrique ventilée axialement suivant la revendication 1, caractérisée en ce que la section active des ouvertures de passage (17) de l'agent de refroidissement varie dans le sens de l'écoulement axial de l'agent de refroidissement dans le corps distributeur d'agent de refroidissement (12) en vue d'assurer un effet de refroidissement uniforme.

3. Machine électrique ventilée axialement suivant la revendication 1 ou 2, caractérisée en ce que, dans le cas d'une ventilation des deux côtés, chaque intervalle polaire (12) contient au moins deux corps distributeurs d'agent de refroidissement (13) qui s'étendent à peu près symétriquement à partir de leurs extrémités d'about jusqu'au milieu du rotor et qui, à cet endroit sont ouverts, partiellement fermés, ou complètement fermés.

4. Machine électrique ventilée axialement suivant l'une quelconque des revendications 1 à 3, caractérisée en ce que des conduits (19) sont prévus dans les corps distributeurs d'agent de refroidissement.

5. Machine électrique ventilée axialement suivant l'une quelconque des revendications 1 à 3, caractérisée en ce que, dans le cas d'une ventilation des deux côtés, les corps distributeurs d'agent de refroidissement (12) sont réalisés d'une seule pièce.

6. Machine électrique ventilée axialement suivant la revendication 5, caractérisée en ce que, dans le cas d'une ventilation des deux côtés, les corps distributeurs d'agent de refroidissement (12) sont réalisés d'une seule pièce et sont séparés, dans la partie correspondant au milieu du rotor, partiellement ou complètement par une cloison de séparation.

7. Machine électrique ventilée axialement suivant la revendication 5, caractérisée en ce que la cloison de séparation a la forme d'une chicane (19).

# FIG.1

FIG. 2

FIG.3

FIG.4